# EUROPÄISCHE PATENTSCHRIFT

(11) **EP 1 544 504 B1**
(45) Veröffentlichungstag und Bekanntmachung des Hinweises auf die Patenterteilung: **26.08.2009**
(21) Anmeldenummer: 04026350.1
(22) Anmeldetag: 05.11.2004
(51) Int. Cl.: F16H 1/28, F03D 11/00

(54) **Planetengetriebe für Windkraftanlagen**
Planetary transmission for wind power plant
Transmission planetaire pour une centrale d'énergie éolienne

(30) Priorität: 19.12.2003 DE 10360693
(43) Veröffentlichungstag der Anmeldung: 22.06.2005
(73) Patentinhaber: Winergy AG, 46562 Voerde (DE)
(72) Erfinder: Hulshof, Frans, 7102 KD Winterswijk (NL)
(74) Vertreter: Radünz, Ingo

(56) Entgegenhaltungen:
- WO-A-02/14690
- WO-A-02/079644
- WO-A-03/014567
- WO-A2-01/48376
- DE-A1- 10 043 593
- DE-A1- 19 604 020
- DE-A1- 19 916 453
- DE-C1- 19 629 168
- DE-U1- 20 208 135

## Beschreibung

Die Erfindung betrifft ein Planetengetriebe, insbesondere für Windkraftanlagen, mit den Merkmalen des Oberbegriffes des Anspruches 1.

Bei einem solchen Planetengetriebe handelt es sich um ein so genanntes integriertes Antriebssystem. Bei bekannten Planetengetrieben dieser Art (WO 03/014567 A1, WO 02/14690 A1, WO 02/079644 A1) besteht das Großlager aus einem großen Wälzlager, beispielsweise einem Doppelkegelrollenlager, dessen Innehring auf dem Außendurchmesser des nicht rotierenden Hohlrades des Planetengetriebes oder der ersten Planetenstufe eines Planetengetriebes angeordnet ist. Der Außenring des Großlagers ist mit dem Planetenträger und dem Rotor der Windturbine verschraubt. Das Hohlrad der Planetenstufe ist mit dem Tragrahmen der Windturbine verschraubt. Das doppelreihige Kegelrollenlager in O-Anordnung ist ein so genanntes Momentenlager, das sowohl die Kräfte und Momente am Rotor aus der Windbelastung als auch das Gewicht des Rotors aufnimmt. Nachteilig bei dieser Konstruktion ist das teure Rollenlager und die ungedämpfte Weiterleitung der Drehmomente des Rotors an das Getriebe und damit an den Generator.

Auch bei der aus der DE 199 16 453 A1 bekannten Windkraftanlage umgibt ein großes Wälzlager das Hohlrad eines Planetengetriebes. Dabei ist der rotierende Innenring des Wälzlagers mit der Rotornabe und über schwingungsgedämpft ausgeführte Mitnahmebolzen mit dem Hohlrad verbunden. Der stillstehende Außenring des Wälzlagers ist an dem Rotorträger befestigt.

Die WO 02/14690 A1 enthält die Merkmale des Oberbegriffs des Anspruchs 1.

Der Erfindung liegt die Aufgabe zugrunde, das gattungsgemäße Planetengetriebe zu vereinfachen und kostengünstiger zu gestalten.

Die Aufgabe wird bei einem gattungsgemäßen Planetengetriebe erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Planentengetriebe handelt es sich ebenfalls um ein integriertes Antriebsystem, bei dem die Mantelfläche und auch die Stirnseiten des Hohlrades dem Großlager als Lauffläche und/oder als Stützfläche eines hydrodynamischen/hydrostatischen Gleitlagers dienen. Das Gleitlager wirkt auch als Momentenlager. Bedingt durch die sich aus den Abmessungen des Planetengetriebes ergebenden großen Oberflächen der Gleitflächen sind bei den auf das Lager wirkenden Momenten und Kräften ein nur sehr geringer statischer Öldruck und geringe Rotordrehzahlen für den Aufbau eines hydrodynamischen Öldruckes erforderlich. Aufgrund dieser Verhältnisse ist eine völlige Trennung der relativ zueinander gleitenden Laufflächen mit dem Schmieröl des Getriebes zu erreichen. Besonders günstig ist für die Gleitlager, dass der Rotor der Windturbine nur eine Hauptdrehrichtung hat.

Die erfindungsgemäße Gestaltung des Planetengetriebes ergibt im Vergleich zu der Anwendung von Wälzlagern eine sehr kostengünstige Lagerung und damit insgesamt ein sehr kostengünstiges Antriebsystem. Auch ist ein Gleitlager wegen des Schmierspalts weniger empfindlich gegen elastische, lastbedingte Verformungen und Wärmedehnungen als ein vorgespanntes großes Doppelkegelrollenlager.

In einer Ausgestaltung weist das erfindungsgemäße Planetengetriebe einen weiteren Vorteil auf, der in der elastischen Anbindung des eigentlichen Planetenträgers mittels elastischer Elemente begründet ist. Hierdurch erfolgt eine Selbstzentrierung des Planetenträgers mit seinen Planetenrädern bezogen auf das Hohlrad, und zwar unabhängig vom Schmierspalt im Lager und von der sehr kleinen Exzentrizität der beiden radialen Laufflächen des Gleitlagers. Weiterhin werden durch die elastische Anbindung des Planetehträgers in Umfangsrichtung Drehmomentstöße gedämpft.

Mehrere Ausführungsbeispiele der Erfindung sind in der Zeichnung dargestellt und werden im Folgenden näher erläutert. Es zeigen:
- Fig. 1: den Längsschnitt durch ein Planetengetriebe nach der Erfindung und
- Fig. 2: den Längsschnitt durch ein Planetengetriebe gemäß einer anderen Ausführungsform nach der Erfindung.

Die dargestellten Planetengetriebe sind insbesondere für den Einsatz in Windkraftanlagen geeignet. Sie können auch außerhalb von Windkraftanlagen als großformatige Planetengetriebe Anwendung finden. Ein nur teilweise dargestellter Rotor 1 einer Windkraftanlage oder ein sonstiger Antrieb ist direkt mit dem rotierenden Teil des Planetengetriebes verbunden.

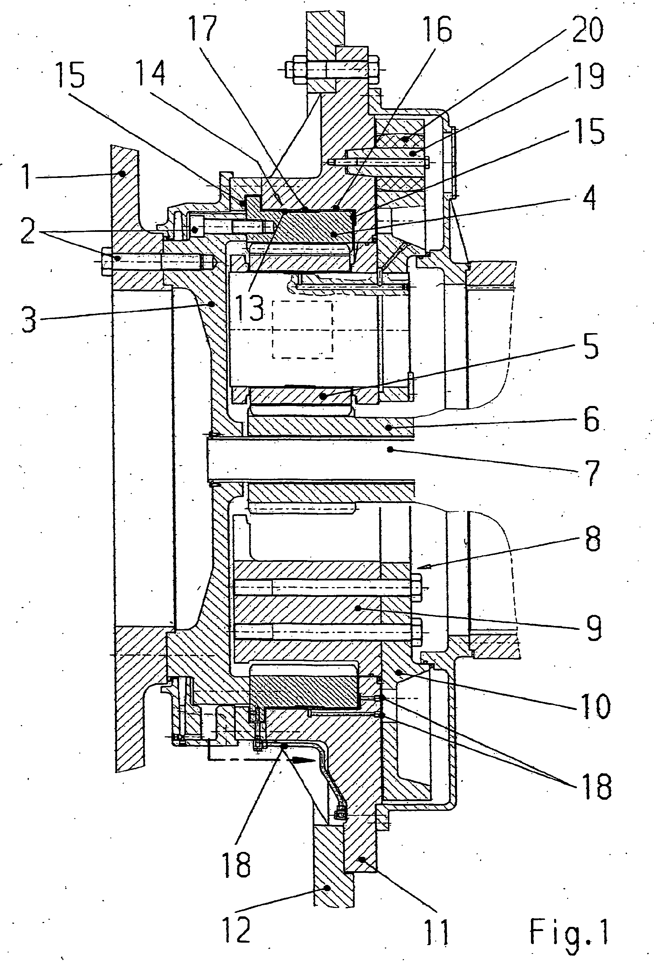

Gemäß Fig. 1 ist der Rotor 1 mit Hilfe von Schraubbolzen 2 an eine Scheibe 3 geschraubt, die wiederum über Schraubbolzen 2 mit dem Hohlrad 4 des Planetengetriebes verbunden ist. Aufgrund der Abmessungen der Windkraftanlage kann das Hohlrad 4 je nach Leistung einen Außendurchmesser von bis zu etwa 2500 mm aufweisen. Das Hohlrad 4 ist mit einer Innenverzahnung versehen, in die die Außenverzahnung von Planetenräder 5 eingreift. Die Planetenräder 5 stehen mit einem zentral angeordneten Sonnenrad 6 in Eingriff. Das Sonnenrad 6 ist entweder direkt oder über eine nachgeschaltete, nicht näher gezeigte Getriebestufe an einen Generator gekoppelt. Durch das Sonnenrad 6 ist ein Rohr 7 zum Durchführen von Steuerleitungen geführt und mit der Scheibe 3 verbunden

Die Planetenräder 5 sind drehbar in einem Planetenträger 8 gehalten. Der Planetenträger 8 besteht aus dem eigentlichen Planetenträgerkörper 9 und einer an diesen angeschraubte Planetenträgerscheibe 10. Die Planetenträgerscheibe 10 ist auf die später beschriebene Weise mit einem das Planetengetriebe umschließenden Getriebe- oder Lagergehäuse 11 verbunden, das auf einem den Rotor 1 und das Planetengetriebe tragenden Rotorträger 12 befestigt ist.

Das Hohlrad 4 ist in das Gehäuse 11 eingesetzt und bildet mit diesem zusammen ein radiales Gleitlager 14 mit Axialführung. Die äußere Umfangsfläche 13 des Hohlrades 4 stellt eine der Gleit- oder Lagerflächen dieses Gleitlagers 14 dar. Zusätzliche Lagerflächen sind an den Stirnseiten 15 des Hohlrades 4 gebildet. Diesen Lagerflächen stehen entsprechende Lagergegenflächen 16 im Gehäuse 11 gegenüber. Zwischen den Lagerflächen (Umfangsfläche 13 und Stirnseiten 15) und den Lagergegenflächen 16 besteht ein Schmierspalt. Hydrostatische Schmiertaschen 17 sind in die Lagerfläche auf der Umfangsfläche 13 des Hohlrades 4 und in der der Stirnseite 15 des Hohlrades 4 gegenüber liegenden Lagergegenfläche 16 des Gehäuses 11 eingearbeitet. Zu den Schmiertaschen 17 sind durch das Gehäuse 11 Leitungen und Bohrungen 18 hindurchgeführt, die mit nicht gezeigten Ölzuführungs- und Ölablaufleitungen in Verbindung stehen. Durch die Ölzuführungsleitungen wird über einen Ölpumpenkreis dem Gleitlager 14 Schmieröl zugeführt.

Bei den großen Abmessungen des an den Rotor 1 der Windkraftanlage angeschlossenen Planetengetriebes und der sich daraus ergebenden auf das Gleitlager 14 wirkenden Kräfte und Momente braucht der Ölpumpenkreis nur einen verhältnismäßig geringen statischen Öldruck aufzubringen, um eine Trennung der Lagerflächen (Umfangsfläche 13 und Stirnseiten 15) und der Lagergegenflächen 16 voneinander zu erreichen. Ebenso reicht schon die geringe Drehzahl des Rotors 1 von etwa 10 bis 15 Umdrehungen pro Minute für die Erzeugung eines hydrodynamischen Öldrucks im Gleitlager 14 aus.

Die Planetenträgerscheibe 10 des Planetenträgers 8 ist mit auf einem Kreis angeordneten Durchgangsbohrungen versehen, durch die Befestigungsbolzen 19 hindurchgeführt sind, die in das Gehäuse 11 eingreifen. Die Befestigungsbolzen 19 sind von ringförmigen, elastischen Elementen 20, z. B. aus Gummi umgeben. Diese elastischen Elemente 20 bewirken eine elastische Anbindung des Planetenträgers 8 an das Gehäuse 11. Die elastische Anbindung dämpft Drehmomentstöße, die in Umfangsrichtung auf das Planetengetriebe wirken, und sorgt für eine Selbstzentrierung des Planetenträgers 8.

Bei der in Fig. 1 dargestellten Ausführungsform eines Planetengetriebes ist der Rotor 1 mit dem rotierenden Hohlrad 4 und der stillstehende Planetenträger 8 mit dem Gehäuse 11 verbunden.

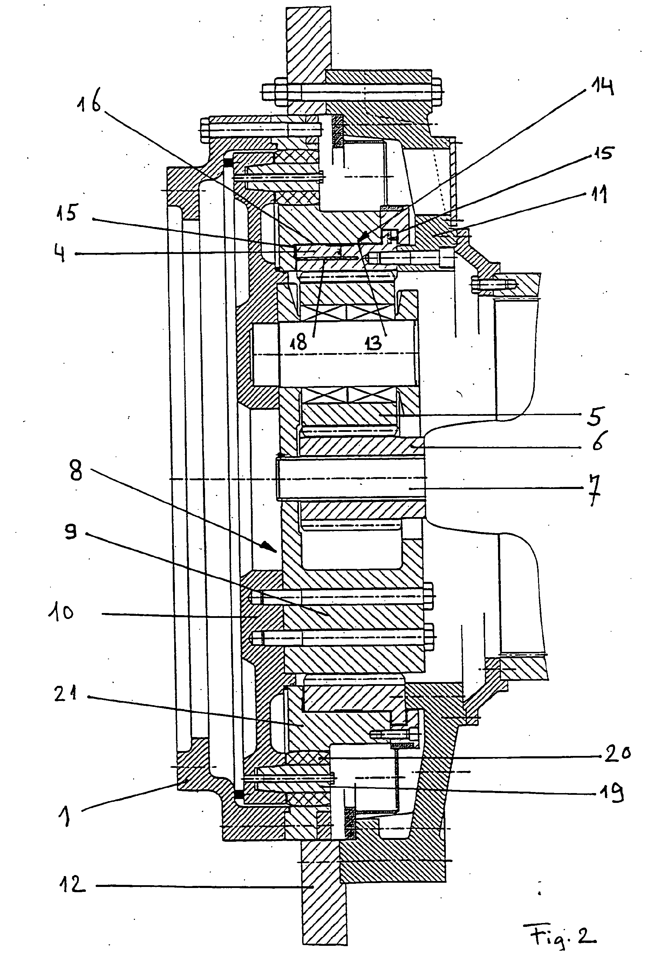

Die Fig. 2 zeigt eine Variante des Planetengetriebes, bei der der Rotor 1 mit dem rotierend angeordneten Planetenträger 8 und das stillstehende Hohlrad 4 mit dem Gehäuse 11 verbunden ist. Der Rotor 1 ist über Schraubbolzen 2 an einem das Hohlrad 4 umschließenden Ring 21 befestigt. Der Ring 21 ist über die von elastischen Elementen 20 umgebenden Befestigungsbolzen 19 elastisch an der Planetenträgerscheibe 10 befestigt. Die Planetenträgerscheibe 10 ist an den Planetenträgerkörper 9 angeschraubt. Das Hohlrad 4 ist in den mit dem Rotor 1 verbundenen Ring 21 eingesetzt.

Auch bei der Ausführung gemäß Fig. 2 dienen die äußere Umfangsfläche 13 und die Stirnflächen 15 des Hohlrades 4 als Lagerfläche eines Gleitlagers 14. Diesen Lagerflächen stehen entsprechende Lagergegenflächen 16 in dem mit dem Rotor 1 verbundenen Ring 21 gegenüber, wobei zwischen den Lagerflächen (Umfangsfläche 13 und Stirnseiten 15) und den Lagergegenflächen 16 ein Schmierspalt gebildet ist. Ansonsten entspricht dieses Gleitlager 14 dem Gleitlager 14 des in Fig. 1 dargestellten Planetengetriebes.

## Patentansprüche

1. Planetengetriebe für Windkraftanlagen, das einen Planetenträger (8) und ein mit einer Innenverzahnung versehenes Hohlrad (4) umfasst und dessen rotierender Teil mit einem Rotor (1) verbunden ist, der zusammen mit dem rotierenden Teil des Planetengetriebes in einem gemeinsamen Großlager gelagert ist, das auf dem Außenumfang des Hohlrades (4) angeordnet ist, **dadurch gekennzeichnet, dass** das Großlager als Gleitlager (14) ausgebildet ist, dessen eine Lagerfläche durch die radial äußere Umfangsfläche (13) des Hohlrades (4) gebildet ist.

2. Planetengetriebe nach Anspruch 1, **dadurch gekennzeichnet, dass** die Stirnflächen (15) des Hohlrades (4) zusätzliche Lagerflächen bilden.

3. Planetengetriebe nach Anspruch 1 oder 2, **dadurch gekennzeichnet, dass** der Rotor (1) mit dem Hohlrad (4) verbunden ist und dass die als Lagerfläche ausgebildete Umfangsfläche (13) des Hohlrades (4) einer Lagergegenfläche (16) gegenübersteht, die in einem das Planetengetriebe umschließenden Gehäuse (11) gebildet ist.

4. Planetengetriebe nach Anspruch 1 oder 2, **dadurch gekennzeichnet, dass** der Rotor (1) mit dem Planetenträger (8) verbunden ist und dass die als Lagerfläche ausgebildete Umfangsfläche (13) des Hohlrades (4) einer mit dem Rotor (1) verbundenen Lagergegenfläche (16) gegenübersteht.

5. Planetengetriebe nach einem der Ansprüche 3, 4, soweit sie auf Anspruch 2 rückbezogen, **dadurch gekennzeichnet, dass** zwischen als Lagerflächen ausgebildeten Stirnflächen (15) und der Umfangsfläche (13) des Hohlrades (4) und den Lagergegenflächen (16) im Gehäuse (11) ein Schmierspalt ausgebildet ist, dass in die Lagerfläche auf der Umfangsfläche (13) und in der der Stirnfläche (15) des Hohlrades (4) gegenüberliegenden Lagergegenfläche (16) des Gehäuses (11) hydrostatische Schmiertaschen (17) eingearbeitet sind und dass durch das Gehäuse (11) zu den Schmiertaschen (17) Leitungen und Bohrungen (18) hindurchgeführt sind, die mit einem Ölpumpenkreis für die Versorgung des Gleitlagers (14) mit Schmieröl in Verbindung stehen

6. Planetengetriebe nach einem der Ansprüche 1 bis 4, **dadurch gekennzeichnet, dass** der Planetenträger (8) über elastische Elemente (20) mit dem Gehäuse (11) verbunden ist.

7. Planetengetriebe nach einem der Ansprüche 1, 2, 4, **dadurch gekennzeichnet, dass** der Planetenträger (8) über elastische Elemente (20) mit dem Rotor (1) verbunden ist.

## Claims

1. Epicyclic gearbox for wind power installations, which comprises a planet support (8) and a hollow wheel (4) provided with an internal tooth system, and whose rotating part is connected to a rotor (1) which is mounted together with the rotating part of the epicyclic gearbox in a common large bearing which is arranged on the external circumference of the hollow wheel (4), **characterized in that** the large bearing is in the form of a journal (14), one of whose bearing surfaces is formed by the radially outer circumferential surface (13) of the hollow wheel (4).

2. Epicyclic gearbox according to Claim 1, **characterized in that** the end surfaces (15) of the hollow wheel (4) form additional bearing surfaces.

3. Epicyclic gearbox according to Claim 1 or 2, **characterized in that** the rotor (1) is connected to the hollow wheel (4), and **in that** the circumferential surface (13) which is in the form of a bearing surface, of the hollow wheel (4) is opposite an opposing bearing surface (16) which is formed in a housing (11) which surrounds the epicyclic gearbox.

4. Epicyclic gearbox according to Claim 1 or 2, **characterized in that** the rotor (1) is connected to the planet support (8), and **in that** the circumferential surface (13) which is in the form of a bearing surface, of the hollow wheel (4) is opposite an opposing bearing surface (16) which is connected to the rotor (1).

5. Epicyclic gearbox according to one of Claims 3, 4, to the extent that they refer back to Claim 2, **characterized in that** a lubricating gap is formed between end surfaces (15), which are in the form of bearing surfaces, and the circumferential surface (13) of the hollow wheel (4) and the opposing bearing surfaces (16) in the housing (11), **in that** hydrostatic lubricating pockets (17) are incorporated in the bearing surface on the circumferential surface (13) and in the opposing bearing surface (16) of the housing (11) which is opposite the end surface (15) of the hollow wheel (4), and **in that** lines and holes (18) are passed through the housing (11) to the lubricating pockets (17) and are connected to an oil pump circuit in order to supply lubricating oil to the journal (14).

6. Epicyclic gearbox according to one of Claims 1 to 4, **characterized in that** the planet support (8) is connected to the housing (11) via elastic elements (20).

7. Epicyclic gearbox according to one of Claims 1, 2, 4, **characterized in that** the planet support (8) is connected to the rotor (1) via elastic elements (20).

## Revendications

1. Engrenage planétaire pour des éoliennes qui comprend une cage ( 8 ) de transmission planétaire, une roue ( 4 ) à denture intérieure et dont la partie tournante est reliée à un rotor ( 1 ) qui, ensemble avec la partie tournante de l'engrenage planétaire, est montée dans un grand palier commun disposé sur le pourtour extérieur de la roue ( 4 ), **caractérisé en ce que** le grand palier est constitué sous la forme d'un palier ( 14 ) lisse, dont une surface de palier est formée par la surface ( 13 ) périphérique extérieure radialement de la roue ( 4 ).

2. Engrenage planétaire suivant la revendication 1, **caractérisé en ce que** les surfaces ( 15 ) frontales de la roue ( 4 ) forment des surfaces supplémentaires de palier.

3. Engrenage planétaire suivant la revendication 1 ou 2, **caractérisé en ce que** le rotor ( 1 ) est relié à la roue ( 4 ) et **en ce que** la surface ( 13 ) périphérique de la roue ( 4 ), constituée en surface de palier, est opposée à une contre surface ( 16 ) de palier qui est formée dans un carter ( 11 ) enfermant l'engrenage planétaire.

4. Engrenage planétaire suivant la revendication 1 ou 2, **caractérisé en ce que** le rotor ( 1 ) est relié à la cage ( 8 ) et **en ce que** la surface ( 13 ) périphérique de la roue ( 4 ), constituée en surface de palier, est opposée à une contre surface ( 16 ) de palier, reliée au rotor ( 1 ).

5. Engrenage planétaire suivant l'une des revendications 3, 4, dans la mesure où elle se rapporte à la revendication 2, **caractérisé en ce qu'**il est formé, entre des surfaces ( 15 ) frontales constituées en surface de palier et la surface (13) périphérique de la roue ( 4 ) et les contre surfaces ( 16 ) de palier dans le carter ( 11 ) , un intervalle de lubrification, **en ce qu'**il est usiné dans la surface de palier sur la surface ( 13 ) périphérique et dans la contre surface ( 16 ) de palier du carter ( 11 ) opposée à la surface ( 15 ) frontale de la roue ( 4 ), des poches ( 17 ) de lubrification hydrostatique et **en ce que** des conduits et des trous ( 18 ) passent à travers le carter ( 11 ) pour aller aux poches ( 17 ) de lubrification et communiquent avec un circuit de pompage d'huile pour l'alimentation du palier ( 14 ) lisse en huile de lubrification.

6. Engrenage planétaire suivant l'une des revendications 1 à 4, **caractérisé en ce que** la cage ( 8 ) est reliée au carter ( 11 ) par des éléments ( 20 ) élastiques.

7. Engrenage planétaire suivant l'une des revendications 1, 2, 4, **caractérisé en ce que** la cage ( 8 ) est reliée au rotor ( 1 ) par des éléments ( 20 ) élastiques.
